# EUROPÄISCHE PATENTSCHRIFT

(11) **EP 1 216 881 B1**
(45) Veröffentlichungstag und Bekanntmachung des Hinweises auf die Patenterteilung: **14.09.2005**
(21) Anmeldenummer: 01125471.1
(22) Anmeldetag: 06.11.2001
(51) Int. Cl.: B60Q 1/04, B60Q 1/068

(54) **Einstellelement zur Befestigung einer Scheinwerferanordnung an einem Fahrzeug**
Adjusting element for mounting a headlight unit on a vehicle
Elément d'ajustage pour fixer un ensemble de phare sur un véhicule

(30) Priorität: 21.12.2000 DE 10063880
(43) Veröffentlichungstag der Anmeldung: 26.06.2002
(73) Patentinhaber: Dr.Ing. h.c.F. Porsche Aktiengesellschaft, 70435 Stuttgart (DE)
(72) Erfinder: Christiansen, Thomas, 71287 Flacht (DE)

(56) Entgegenhaltungen:
- EP-A- 0 679 553
- WO-A-00/17008
- US-A- 5 143 331
- US-A- 5 424 923

## Beschreibung

Die Erfindung betrifft ein Einstellelement zur Befestigung einer Scheinwerferanordnung an einem Fahrzeug gemäß dem Oberbegriff des Anspruchs 1.

Aus der FR 2 606 341 A1 ist ein Einstellelement zur Befestigung einer Scheinwerferanordnung an einem Fahrzeug bekannt, das sich aus einem Mutternelement und einem Schraubelement zusammensetzt. Das Schraubelement ist an seinem einen Endbereich mit der Scheinwerferanordnung verbunden, wogegen der andere Endbereich des Schraubelements durch eine kreisrunde Öffnung eines karosserieseitigen Trägerblechs hindurchgeführt und auf den vorstehenden Gewindebereich das Mutternelement aufgedreht ist. Diese Art von Einsteckelement ermöglicht lediglich eine Einstellbarkeit in einer Richtung und zwar in Längsrichtung.

Aus der WO 00/17008 ist ein gattungsgemässes Ein Stellelement bekannt.

Aufgabe der Erfindung ist es, ein Einstellelement zur Befestigung einer Scheinwerferanordnung an einem Fahrzeug so weiterzubilden, daß eine dreidimensionale Einstellbarkeit für die Scheinwerferanordnung gegeben ist.

Erfindungsgemäß wird diese Aufgabe durch die Merkmale des Anspruchs 1 gelöst. Weitere erfindungsgemäße Merkmale sind in den Unteransprüchen enthalten.

Die wesentlichen erfindungsgemäßen Merkmale des Einstellelements sind darin zu sehen, daß durch die mit einer exzentrisch ausgebildeten Aufnahmenut versehenen Spreizmutter und die Ausbildung der Öffnung ein Einsteckelement geschaffen wird, mit dem eine dreidimensionale Einstellbarkeit für die Scheinwerferanordnung gegeben ist. Die Spreizmutter mit Klemmfunktion und exzentrisch ausgebildeter Aufnahmenut läßt sich in einfacher Weise in die Öffnung des karosserieseitigen Trägerblechs einsetzen und wird mittels einer Fixiereinrichtung positioniert. Das Übermaßloch gewährleistet eine freie Einstellbarkeit in einer Ebene (hier: Y-Z). Durch Eindrehen des Schraubelements, welches die Verbindung zur Scheinwerferanordnung beinhaltet, klemmt sich die Spreizmutter am Trägerblech fest. Das Einstellelement ist in der Y-Z-Ebene fixiert. Die dritte Einstellung - normal zur Klemmfläche - wird durch die Einschraubtiefe des Schraubelements dargestellt. Aufgrund des beim Einschrauben zwischen Spreizmutter und Schraubelement auftretenden Reibmoments legt sich die exzentrische Aufnahmenut der Spreizmutter an die untere Kante des Übermaßlochs an. Hierdurch erfolgt zusätzlich zur Klemmverbindung eine Abstützung in Z-Richtung.

Ein Ausführungsbeispiel der Erfindung ist nachstehend anhand einer Zeichnung näher beschrieben.

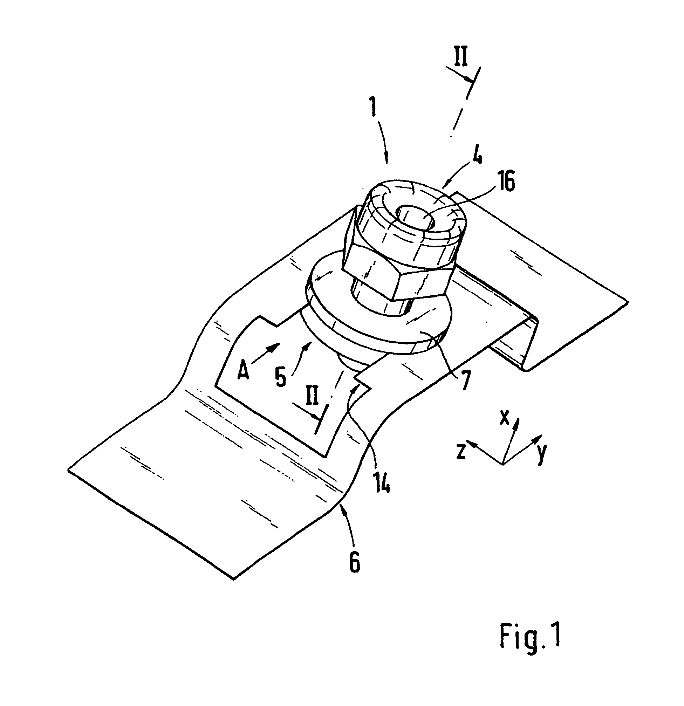

Es zeigen
- Fig. 1: eine perspektivische Ansicht auf ein Einstellelement zur Befestigung einer Scheinwerferanordnung,

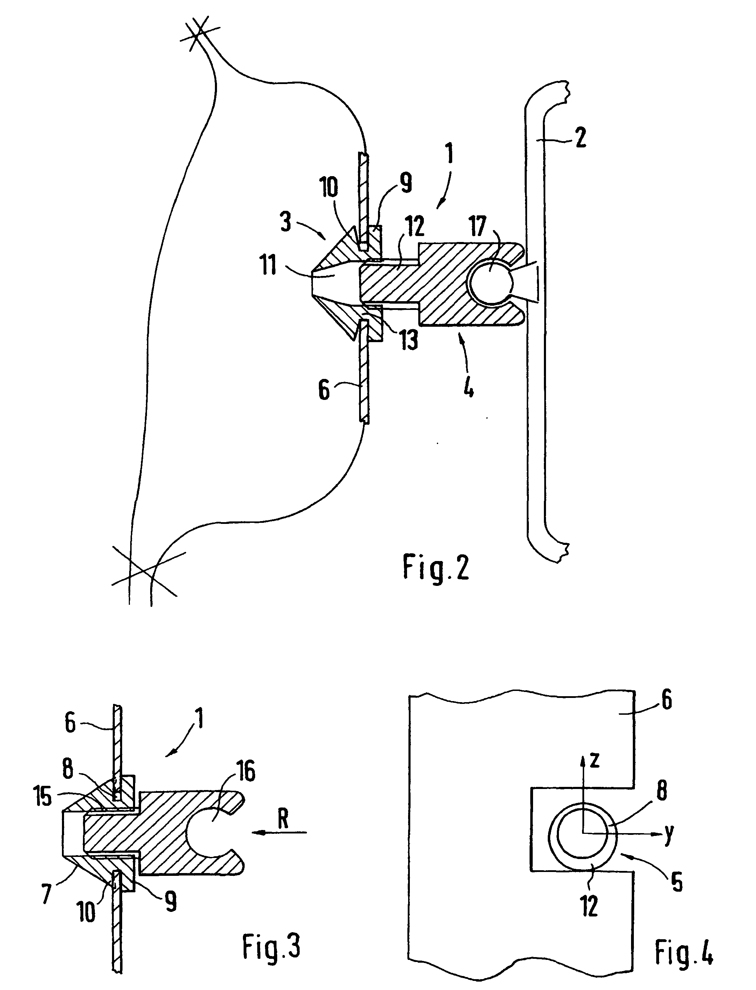

- Fig. 2: einen Schnitt nach der Linie II-II der Fig. 1,
- Fig. 3: einen Schnitt entsprechend Fig. 2, wobei der Klemmzustand des Einstellelements dargestellt ist und
- Fig.4: eine Ansicht in Pfeilrichtung R der Fig. 3.

Ein Einstellelement 1 zur Befestigung einer Scheinwerferanordnung 2 an einem Fahrzeug umfaßt ein Mutternelement 3 und ein Schraubelement 4. Das Mutternelement 3 wird durch eine in eine Öffnung 5 eines karosserieseitigen Trägerblechs 6 einsetzbare und einstellbare Spreizmutter 7 gebildet. Die Spreizmutter 7 ist mit einer exzentrisch ausgebildeten Aufnahmenut 8 versehen, die von einem oberen Kragenabschnitt 9 und einem unteren Lippenabschnitt 10 begrenzt ist.

Der Kragenabschnitt 9 und der Lippenabschnitt 10 liegen an gegenüberliegenden Seiten des Trägerbleches 6 an. Die Spreizmutter 7 weist eine mittige Aufnahme 11 zur Aufnahme eines Schraubenteils 10 des Schraubelements 4 auf. Aufgrund der exzentrisch ausgebildeten Aufnahmenut 8 weist ein zwischen der Aufnahme 11 und dem Grund der Aufnahmenut 8 verlaufender Steg 13 eine sich verändernde Wanddicke auf.

Die Öffnung 5 am Trägerblech 6 wird durch eine einseitig offene, längliche Schlitzöffnung gebildet, die im Einführbereich für die Spreizmutter 7 eine Erweiterung 14 aufweist. Die Öffnung weist in Einschubrichtung A und quer dazu ein größeres Maß auf als der Innendurchmesser der Aufnahmenut 8 (Übermaßloch), so daß durch Verdrehen der Spreizmutter 7 eine Einstellbarkeit zwischen Spreizmutter 7 und Öffnung 5 gegeben ist.

Das Schraubelement 4 weist ein in die Spreizmutter 7 eindrehbares Schraubenteil 12 mit einem Außengewinde 15 und gegenüberliegend diesem Schraubenteil 12 eine Aufnahme 16 für ein Kugelelement 17 der Scheinwerferanordnung 2 auf. Beim Eindrehen des Schraubelements 12 in die Spreizmutter 7 spreizt sich diese auf und klemmt sich am Trägerblech 6 fest.

## Patentansprüche

1. Einstellelement zur Befestigung einer Scheinwerferanordnung an einem Fahrzeug, wobei das Einstellelement ein Mutternelement und ein Schraubelement umfaßt, das Schraubelement in das Mutternelement eingedreht ist, daß an einem karosserieseitigen Trägerblech eine Öffnung ausgebildet ist, und daß das Mutternelement (3) durch eine in die Öffnung (5) einsetzbare und einstellbare Spreizmutter (7) gebildet ist, **dadurch gekennzeichnet, daß** die Spreizmutter eine exzentrisch ausgebildete Aufnahmenut (8) aufweist, und daß die Öffnung (5) in Einschubrichtung A und quer dazu ein größeres Maß aufweist als der Innendurchmesser der Aufnahmenut (8) und daß durch Eindrehen des Schraubelementes (4) in die positionierte Spreizmutter (7) diese am Trägerblech (6) festgelegt ist.

2. Einstellelement nach Anspruch 1, **dadurch gekennzeichnet, daß** die Öffnung (5) am Trägerblech (6) durch eine einseitig offene, längliche Schlitzöffnung gebildet ist, die im Einführbereich eine Erweiterung (14) aufweist.

3. Einstellelement nach Anspruch 1, **dadurch gekennzeichnet, daß** die Aufnahmenut (8) von einem oberen Kragenabschnitt (9) und einem unteren Lippenabschnitt (10) begrenzt ist und daß der Kragenabschnitt (9) und der Lippenabschnitt (10) an gegenüberliegenden Seiten des Trägerblechs (6) anliegen.

4. Einstellelement nach den Ansprüchen 1 bis 3, **dadurch gekennzeichnet, daß** durch Verdrehen der Spreizmutter (7) um die exzentrische Aufnahmenut (8) eine Einstellbarkeit in zwei Ebenen ermöglicht wird.

5. Einstellelement nach den Ansprüchen 1 bis 4, **dadurch gekennzeichnet, daß** die Einstellbarkeit in der dritten Ebene durch unterschiedliche Eindrehtiefe des Schraubelementes (4) in die Spreizmutter (7) erfolgt.

6. Einstellelement nach den Ansprüchen 1 bis 5, **dadurch gekennzeichnet, daß** das Schraubelement (4) ein in die Spreizmutter (7) eindrehbares Schraubenteil (12) und gegenüberliegend diesem Schraubenteil (12) eine Aufnahme (16) für ein Kugelelement (17) der Scheinwerferanordnung (2) aufweist.

## Claims

1. An adjusting member for mounting a headlight assembly on a vehicle, wherein the adjusting member comprises a nut member and a bolt member, the bolt member is screwed into the nut member, an opening is formed in a supporting plate on the body, and the nut member (3) is formed by an adjustable expansion nut (7) insertable into the opening (5), **characterised in that** the expansion nut has an eccentrically formed locating groove (8), and **in that** the opening (5) has a greater dimension in the insertion direction A and transversely thereto than the inner diameter of the locating groove (8), and **in that**, by screwing the bolt member (4) into the positioned expansion nut (7), the latter is secured to the supporting plate (6).

2. An adjusting member according to claim 1, **characterised in that** the opening (5) in the supporting plate (6) is formed by an elongate slotted opening which is open at one end and which has a widening (14) in the insertion region.

3. An adjusting member according to claim 1, **characterised in that** the locating groove (8) is bounded by an upper collar portion (9) and a lower lip portion (10) and **in that** the collar portion (9) and the lip portion (10) rest against opposite sides of the supporting plate (6).

4. An adjusting member according to any one of claims 1 to 3, **characterised in that** adjustability in two planes is made possible by rotating the expansion nut (7) around the eccentric locating groove (8).

5. An adjusting member according to any one of claims 1 to 4, **characterised in that** adjustability in the third plane is achieved by varying the depth to which the bolt member (4) is screwed into the expansion nut (7).

6. An adjusting member according to any one of claims 1 to 5, **characterised in that** the bolt member (4) has a threaded part (12) which can be screwed into the expansion nut (7) and, opposite this threaded part (12), a recess (16) for a spherical component (17) of the headlight assembly (2).

## Revendications

1. Elément d'adaptation pour fixer un ensemble de phare sur un véhicule, l'élément d'adaptation comprenant un élément d'écrou et un élément de vis, élément d'adaptation dans lequel l'élément de vis est vissé dans l'élément d'écrou, une ouverture est formée dans une tôle de support située côté carrosserie et l'élément d'écrou (3) est formé par un écrou à expansion pouvant être inséré et réglé dans l'ouverture (5), **caractérisé en ce que** l'écrou à expansion présente une rainure de réception excentrique (8) et **en ce que** l'ouverture (5) présente, dans la direction d'introduction A et transversalement à celle-ci, une dimension plus importante que le diamètre intérieur de rainure de réception (8) et **en ce que** par rotation de l'élément de vis (4) dans l'écrou à expansion (7) positionné, ce dernier est mis fixement en place sur la tôle de support (6).

2. Elément d'adaptation selon la revendication 1, **caractérisé en ce que** l'ouverture (5) sur la tôle de support (6) est formée par une ouverture en fente longitudinale qui présente un élargissement (14) dans la zone d'introduction.

3. Elément d'adaptation selon la revendication 1, **caractérisé en ce que** la rainure de réception (8) est délimitée par une section de collerette (9) supérieure et une section de lèvre (10) inférieure et **en ce que** la section de collerette (9) et la section de lèvre (10) se trouvent sur les faces opposées de la tôle de support (6).

4. Elément d'adaptation selon les revendications 1 à 3, **caractérisé en ce que** par rotation de l'écrou à expansion (7) autour de la rainure de réception excentrique (8) on obtient une possibilité de réglage dans deux plans.

5. Elément d'adaptation selon les revendications 1 à 4, **caractérisé en ce que** le réglage dans le troisième plan s'effectue par les différentes profondeurs de vissage de l'élément de vis (4) dans l'écrou à expansion (7).

6. Elément d'adaptation selon les revendications 1 à 5, **caractérisé en ce que** l'élément de vis (4) présente une partie filetée (12) pouvant être vissée dans l'écrou à expansion (7) et, à l'opposé de cette partie filetée 12, un logement (16) pour un élément en boule (17) de l'ensemble de phare (2).
